# EUROPEAN PATENT APPLICATION

(11) **EP 2 175 476 A1**
(43) Date of publication of application: **14.04.2010**
(21) Application number: 08757311.9
(22) Date of filing: 15.05.2008
(51) Int. Cl.: H01J 65/04, H05B 41/14

(54) **MAGNETIC ENERGY LAMP WITH BUILT-IN MAGNETIC ENERGY GENERATOR**

(30) Priority: 15.06.2007 CN 200710074973
(71) Applicant: Li, Jin, PanYu District, GuangZhou GuangDong 511450 (CN)
(72) Inventor: Li, Jin, PanYu District, GuangZhou GuangDong 511450 (CN)
(74) Representative: Desaix, Anne
(86) International application number: PCT/CN2008/000941
(87) International publication number: WO 2008/154797

(57) **Abstract**

A magnetic energy lamp, the fluorescent of which is excited by the electromagnetic induction generated by a built-in magnetic energy generator for lighting, comprises a lamp body (101) in which at least one through or internal hole (104) is arranged, at least one magnetic energy generator (106) is disposed in the through or internal hole (104), and the magnetic energy generator (106) is coupled with a lamp driving pulse transformer or an inverting or alternating circuit comprising of a half-bridge or a full-bridge driving IC to generate electromagnetic coupling or electromagnetic induction. The vacuum cavity of the lamp, enclosed by the lamp body (101) and the through hole (104) at their two ends, is filled with the inert gas and coated with the rare earth phosphor.

## Description

### Technical Field

This application relates to an illuminating lamp in an illumination field, in particular, to a magnetic energy lamp in which a built-in magnetic energy generator is used for generating electromagnetic induction to activate fluorescent powders in the lamp to emit light.

### Background of the Invention

. In general illuminating lamps, filaments and electrodes are used to emit light. However, such illuminating lamps have low energy efficiency and short lifetime. At present, a light attenuation of a compact fluorescent lamp will be more than 20% if it has been used for 2,000 hours; luminous efficiency of a large-power compact fluorescent lamp is 48∼53 Lm/W, an input power of the compact fluorescent lamp is 3W∼120W; and an efficiency factor of the compact fluorescent lamp is 0.6-0.95. Although the compact fluorescent lamp presents a notable progress in comparison with ordinary illuminating lamps, it is not well satisfied in use. A novel electrodeless lamp has an input power of 23W∼165W. A 23W compact electrodeless lamp "Genura" provided by General Electric Company, disclosed in "Lamps and Lighting" edited by J.R. Coaton and A. M. Marsden in 1994, has a lifetime of 1000 hours and a luminous efficiency of 48 Lm/W, representing a notable improvement on the lifetime in comparison with the compact fluorescent lamp. However, the electrodeless lamp has only one shape of pear-shaped and only one electromagnetic coupling form, i.e., to locate ferrite magnetic materials in the middle of the bottom of the lamp body. Due to a resonant frequency of 2.6 MHz∼2.8 MHz, the circuit design for the electrodeless lamp is complicated and costly, considerable conductive interference, high frequency electromagnetic interference and high frequency electromagnetic radiation are generated. In addition, a low electromagnetic transmission efficiency, a large power loss and a high temperature increase are caused. The product and the circuit for the electrodeless lamp are unreliable.

### Summary of the Invention

The present application aims at a magnetic energy lamp with a built-in magnetic energy generator, which can operate reliably and has a high lighting efficiency, a long lifetime, and a wide range of frequency.

To this end, the present application provides a magnetic energy lamp with a built-in magnetic energy generator. The magnetic energy lamp may comprise a lamp body, in which at least one through hole or internal hole is arranged. At least one magnetic energy generator is mounted in the through hole or internal hole. Electromagnetic coupling or electromagnetic induction will be formed between the magnetic energy generator and a coupling driven pulse transformer or an inversing or alternating circuit, wherein the inversing or alternating circuit may be formed by a half-bridge or full-bridge driven IC of the magnetic energy lamp.

According to the present application, each end of the through hole may be hermetically connected to one end of the lamp body so as to form a vacuum chamber, which is filled with inert gases and coated with rare earth fluorescent powders.

According to the present application, the through hole may have a shape of ellipse, circle, oblate, semi-circle, rectangle, square or polygon.

According to the present application, the lamp body with the through hole may be made of glass materials and have a shape of ellipse, sphere, straight tube, olive, oblate, circle, or flat plate.

According to the present application, a drainage hole may be provided at one or two ends of the lamp body. A small glass tube for receiving indium network or amalgam may be provided at one or two ends of the lamp body. The small glass tube may be hermetically connected to the lamp body and arranged in the lamp body to be located in middle of the lamp body.

According to the present application, the internal hole may have a closed front end and an open back end. The front end may extend into the lamp body and the back end may be hermetically connected to one end of the lamp body so as to form a vacuum chamber, which is filled with inert gases and coated with rare earth fluorescent powders. The internal hole may have a shape of ellipse, circle, oblate, semi-circle, rectangle, square or polygon.

According to the present application, the lamp body with the internal hole may be made of glass materials and have a shape of ellipse, sphere, straight tube, olive, oblate, circle, or flat plate.

According to the present application, the magnetic energy generator may comprise soft magnetic materials with or without a hole. The soft magnetic materials are amorphous soft magnetic materials, nanocrystal soft magnetic materials, or soft magnetic ferrite materials, with a shape of ellipse, circle, oblate, semi-circle, rectangle, square or polygon.

According to the present application, the soft magnetic materials of the built-in magnetic energy generator may be coated with an insulating material or covered by a frame. An electromagnetic inductive coil may be wound on the insulating material or the frame. The electromagnetic inductive coil may be a stripe or a multi-strands enameled wire wrapped by an insulating material.

According to the present application, the magnetic energy generator may be an air-core coil wound on one or more ends of the lamp body by a multi-strands enameled wire or a multi-level stripe or enameled wire. The air-core coil may be wound on the lamp body or a coil frame. The coil frame or the air-core coil may be located on one or more ends of the lamp and powered by an alternating circuit in the magnetic energy lamp to induce electromagnetic coupling and electromagnetic induction so that the lamp body is activated to emit light.

According to the present application, a metal member for heat dispersion and shielding may be mounted on the lamp body at an outer end where the magnetic energy generator is connected. The metal member for heat dispersion and shielding may be mounting means acting as a mounting rack for fixedly connecting to a lamp ho lder.

According to the present application, a bowl-shaped heat dispersion surface may be arranged on top of the lamp body, and an aluminium shielding mesh may be arranged at bottom of the bowl-shaped heat dispersion surface.

According to the present application, the magnetic energy lamp may have an electronic circuit resonant operating frequency in a range of 36 to 350 KHz and an electromagnetic induction resonant operating frequency in a range of 36 to 350 KHz.

According to the present application, the magnetic energy lamp may be configured so that an output load end of the magnetic energy lamp is shorted when the magnetic energy lamp is powered by an uninterrupted power supply, and the magnetic energy lamp is self-activated to re-illuminate when the output load end is no longer shorted, or an input power supply needs to be shut and then restarted when the output load end is no longer shorted so as to activate the magnetic energy lamp to re-illuminate.

As compared with the prior arts, the magnetic energy lamp according to the present application may have various simple structures. The resonant operating frequency of the magnetic energy lamp according to the present application is reduced from 2.6MHz∼2.8 MHz to 36∼350KHz, so that temperature of the circuit, magnet and lamp body is reduced. The efficiency of electromagnetic transmission is increased by 25∼36%. The strength of electromagnetic induction increases by 2∼4 times. The application of the magnetic energy lamp is broadened.

### Brief Description of the Drawing

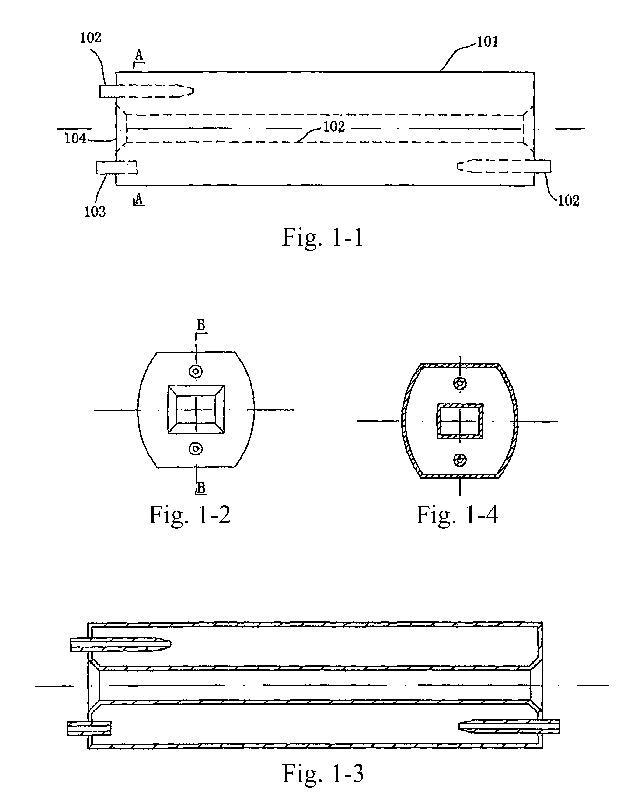

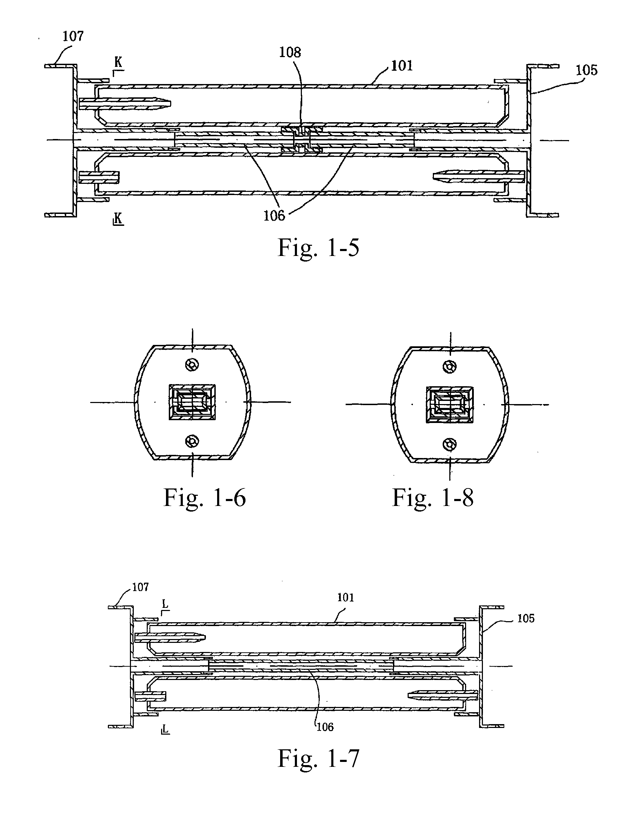

Figure 1-1 is a front view of a tambourin-shaped lamp body with a hole according to the present application;
Figure 1-2 is a left view of Figure 1-1;
Figure 1-3 is a section view of Figure 1-2 along the line B-B;
Figure 1-4 is a section view of Figure 1-1 along the line A-A;
Figure 1-5 is a section view of a tambourin-shaped lamp body with two magnetic energy generators according to the present application, in which a mounting rack is provided;
Figure 1-6 is a section view of Figure 1-5 along the line K-K;
Figure 1-7 is a section view of a tambourin-shaped lamp body with a single magnetic energy generator according to the present application, in which a mounting rack is provided;
Figure 1-8 is a section view of Figure 1-7 along the line L-L;
Figure 2-1 is a front view of an olive-shaped lamp body with a separate receiving chamber located at each end according to the present application;
Figure 2-2 is a left view of Figure 2-1;

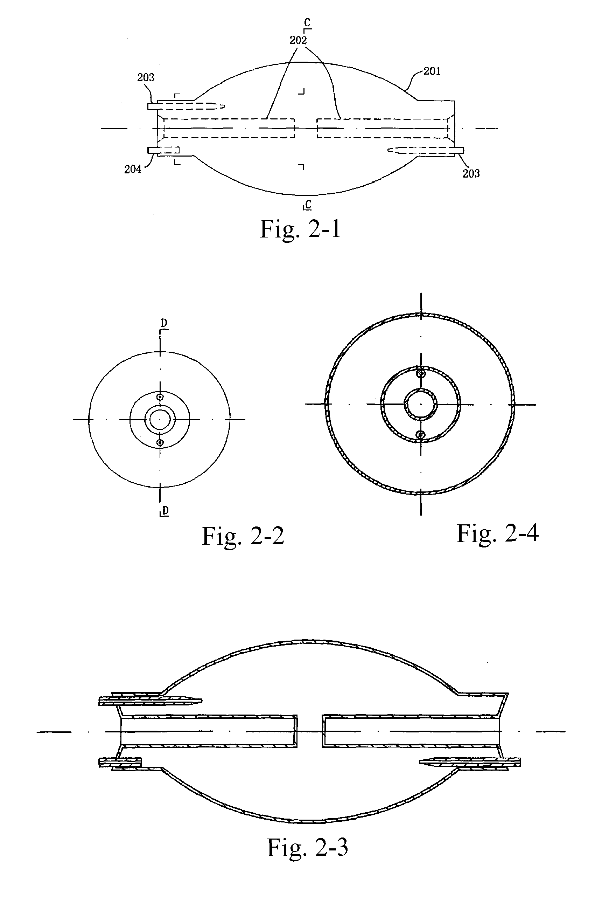

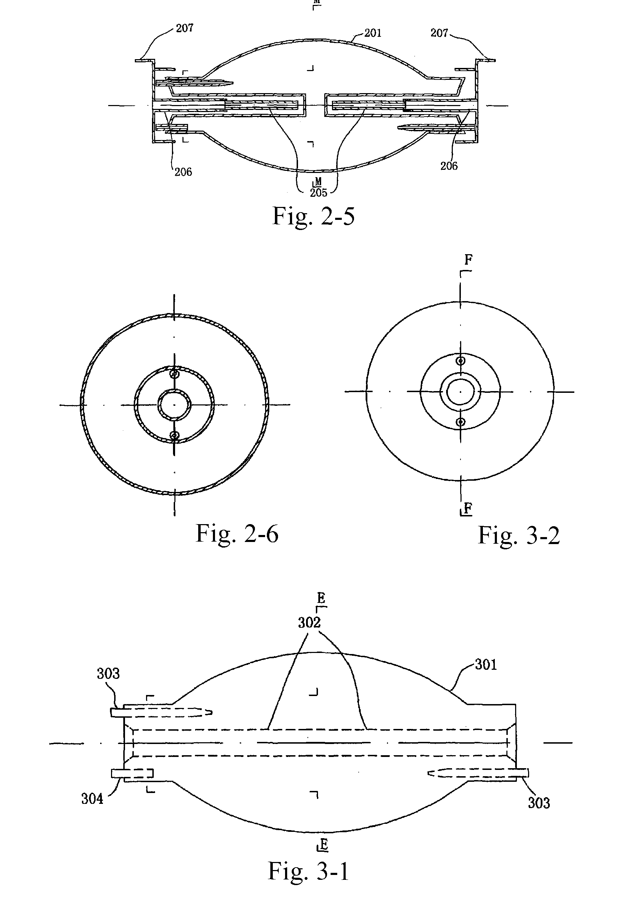

Figure 2-3 is a section view of Figure 2-2 along the line D-D;
Figure 2-4 is an echelon section view of Figure 2-1 along the line C-C;
Figure 2-5 is a section view of an olive-shaped lamp body with two separate magnetic energy generators according to the present application, in which a mounting rack is provided;
Figure 2-6 is an echelon section view of Figure 2-5 along the line M-M;

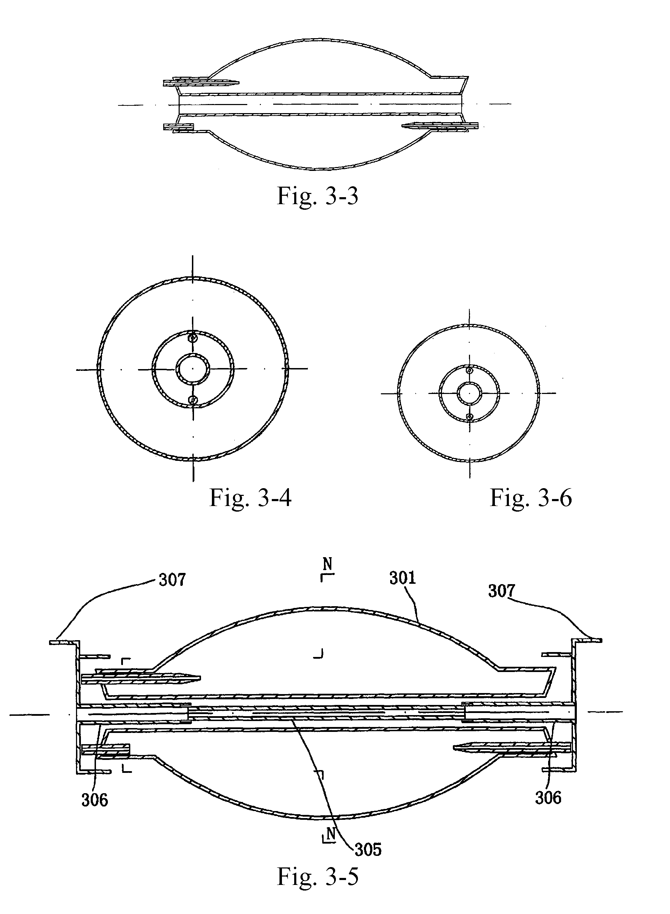

Figure 3-1 is a front view of an olive-shaped lamp body with a single receiving chamber according to the present application;
Figure 3-2 is a left view of Figure 3-1;
Figure 3-3 is a section view of Figure 3-1 along the line F-F;
Figure 3-4 is an echelon section view of Figure 3-2 along the line E-E;
Figure 3-5 is a section view of an olive-shaped lamp body with a single separate magnetic energy generator according to the present application, in which a mounting rack is provided;
Figure 3-6 is an echelon section view of Figure 3-5 along the line N-N;

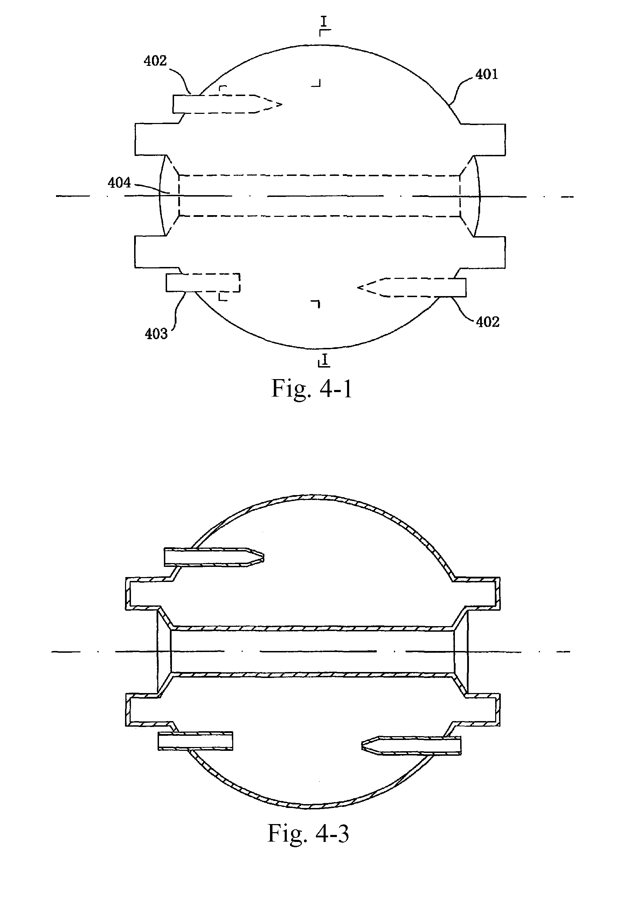

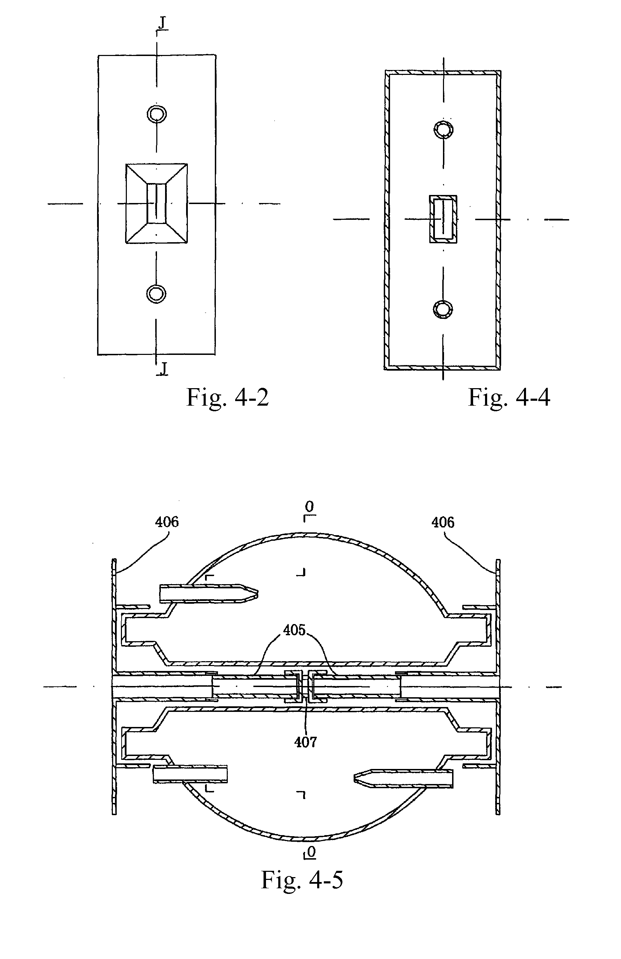

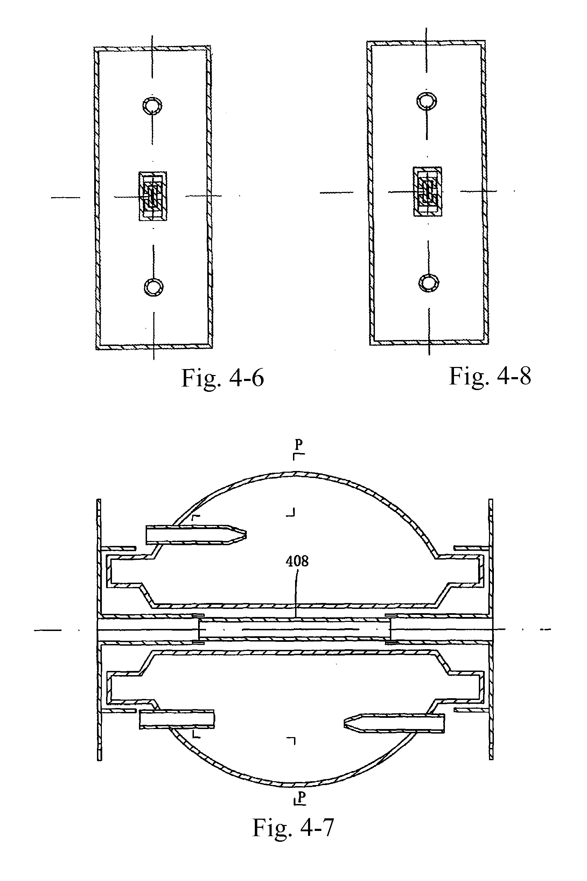

Figure 4-1 is a front view of an oblate lamp body with a through hole according to the present application;
Figure 4-2 is a left view of Figure 4-1;
Figure 4-3 is a section view of Figure 4-1 along the line J-J;
Figure 4-4 is a section view of Figure 4-2 along the line I-I;
Figure 4-5 is a section view of an oblate lamp body with two magnetic energy generators according to the present application, in which a mounting rack is provided;
Figure 4-6 is an echelon section view of Figure 4-5 along the line O-O;
Figure 4-7 is a section view of an oblate lamp body with a single magnetic energy generator according to the present application, in which a mounting rack is provided;
Figure 4-8 is an echelon section view of Figure 4-7 along the line P-P;

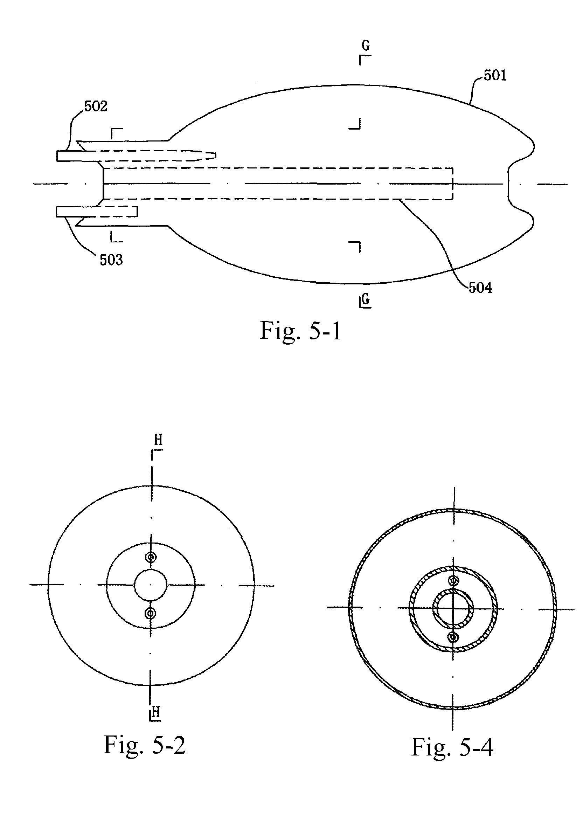

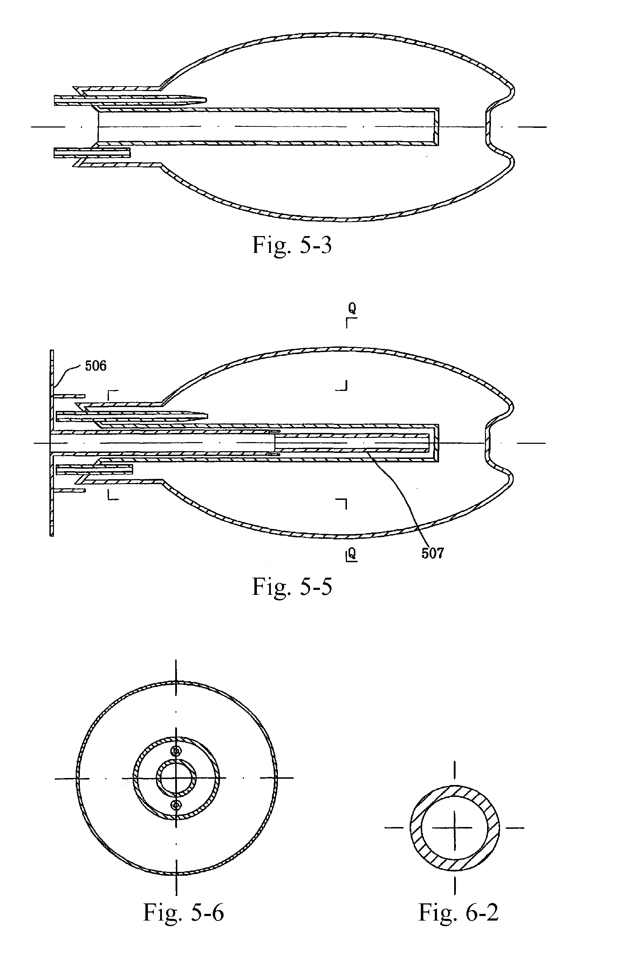

Figure 5-1 is a front view of an olive-shaped lamp body with a through hole according to the present application;
Figure 5-2 is a left view of Figure 5-1;
Figure 5-3 is a section view of Figure 5-1 along the line H-H;
Figure 5-4 is an echelon section view of Figure 5-2 along the line G-G;
Figure 5-5 is a section view of an olive-shaped lamp body with a through hole and a single magnetic energy generator according to the present application, in which a mounting rack is provided;
Figure 5-6 is an echelon section view of Figure 5-5 along the line Q-Q;

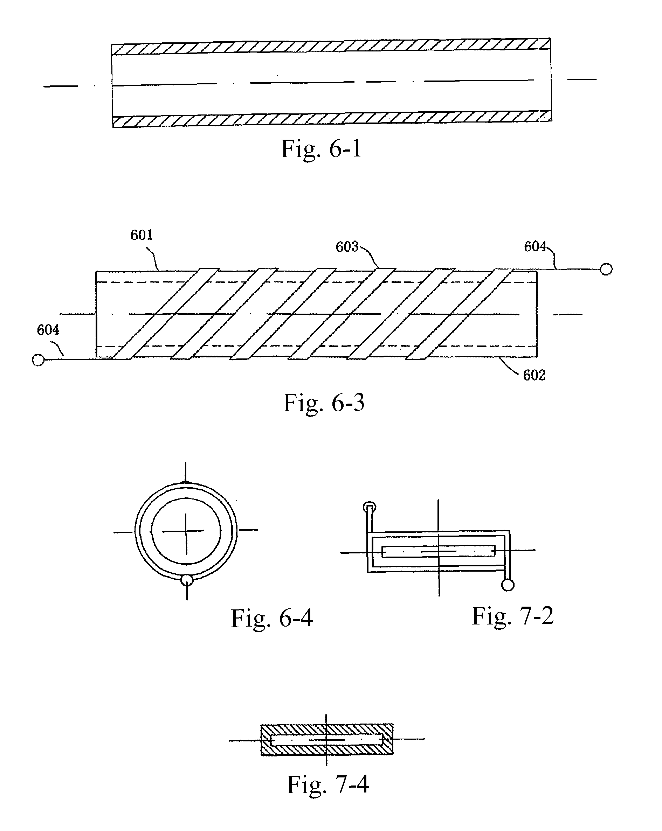

Figure 6-1 is a section view of a magnet of a cylinder magnetic energy generator with a hole according to the present application;
Figure 6-2 is another section view of a magnet of a cylinder magnetic energy generator with a hole according to the present application;
Figure 6-3 is a front view of a cylinder magnetic energy generator with a hole according to the present application;
Figure 6-4 is a left view of Figure 6-3;

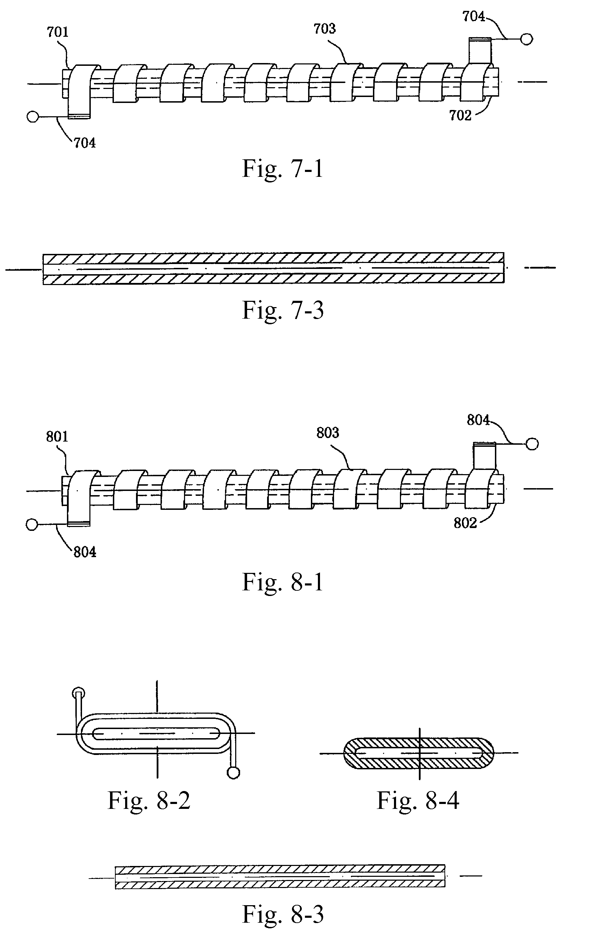

Figure 7-1 is a front view of a flat rectangle magnetic energy generator with a hole according to the present application;
Figure 7-2 is a left view of Figure 7-1;
Figure 7-3 is a section view of a magnet of a flat rectangle magnetic energy generator with a hole according to the present application;
Figure 7-4 is another section view of a magnet of a flat rectangle magnetic energy generator with a hole according to the present application;
Figure 8-1 is a front view of an oblate magnetic energy generator with a hole according to the present application;
Figure 8-2 is a left view of Figure 8-1;
Figure 8-3 is a section view of a magnet of an oblate magnetic energy generator with a hole according to the present application;
Figure 8-4 is another section view of a magnet of an oblate magnetic energy generator with a hole according to the present application;

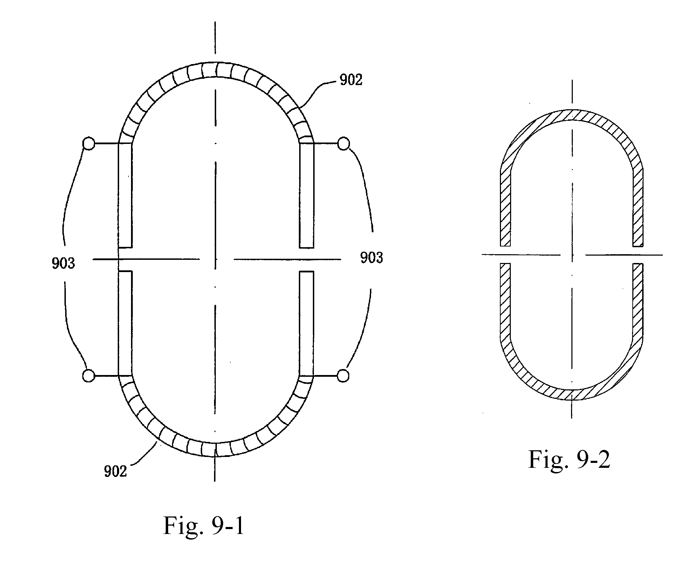

Figure 9-1 is a schematic view of a U-shaped magnetic energy generator according to the present application;
Figure 9-2 is a section view of a magnet of a U-shaped magnetic energy generator according to the present application;

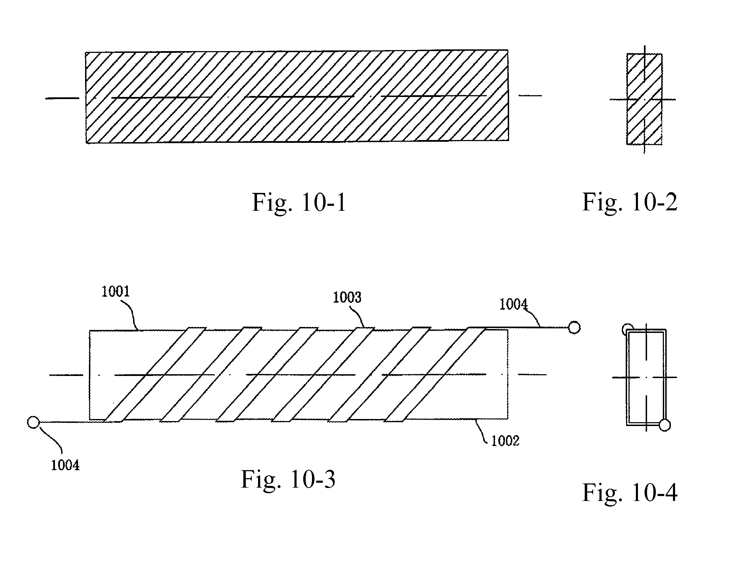

Figure 10-1 is a section view of a magnet of a flat plate-shaped rectangle magnetic energy generator according to the present application;
Figure 10-2 is another section view of a magnet of a flat plate-shaped rectangle magnetic energy generator according to the present application;
Figure 10-3 is a front view of a flat plate-shaped rectangle magnetic energy generator according to the present application; and
Figure 10-4 is a left view of Figure 10-3.

### Detailed Description

Hereinafter, the application will be described with reference to embodiments and accompanying drawings.

A magnetic energy lamp with a built-in magnetic energy generator is composed of the following three portions: an inverting or alternating circuit formed by a magnetic energy lamp coupling driven pulse transformer or by a half-bridge or full-bridge driven IC; a built-in magnetic energy generator; and a hollow glass lamp body applied with fluorescent materials and having a through hole or an internal hole.

In this application, the alternating circuit and the built-in magnetic energy generator, instead of the filaments and electrodes used in conventional illuminating lamp, are used to implement the electromagnetic coupling and electromagnetic induction. The alternating circuit and the built-in magnetic energy generator are inserted into the hollow glass lamp body applied with fluorescent materials and having an internal hole correspondingly to form the magnetic energy lamp.

An insulating frame on which electromagnetic inductive coils are wound is attached to the magnetic energy generator according to the present application. Windings of the electromagnetic inductive coils are composed of a single copper stripe or a multi-strands enameled wire wrapped by insulating materials, such that a reduced wire resistance, a reduced parasitic inductance and a reduced parasitic capacitance generated between windings are obtained. Besides, the skin effect is also reduced by using such windings. The magnetic energy generator uses soft-magnetic materials with holes to implement the electromagnetic coupling and the electromagnetic induction so as to restrain the temperature increase of the built-in magnetic energy generator and the illuminating lamp body and improve the reliability of the electronic circuit and the electromagnetic energy generator operating in a stable state. The magnet for the built-in magnetic energy generator may be designed as a magnet with or without a hole.

The magnetic energy lamp with the built-in magnetic energy generator according to the present application may be of a single-end or multi-end structure and have a semi-closed internal hole. The built-in magnetic energy generator with a hole allows air convection between the generator and an inner chamber of a lamp body, so as to restrain the temperature increase of the built-in magnetic energy generator and the lamp body.

The magnetic energy lamp is designed to have a through hole so that the air convection is formed between the built-in magnetic energy generator and the inner chamber, thereby restrains the temperature increase of the built-in magnetic energy generator and the lamp body. In particular, the following designs are applied in the present application.

A. The built-in magnetic energy generator is composed of one or more separate magnetic cores located in the lamp body having an internal hole. A fixed aluminium alloy member is arranged at one end of the magnetic energy generator. An aluminium alloy heat conductor whose position is adjustable is arranged at the other end of the magnetic energy generator. The aluminium alloy heat conductor is connected at one end or both ends of the lamp body and is fixed to an aluminium alloy heat dissipation plate, the diameter of which is several times larger than that of the magnetic core of the magnetic energy generator. The aluminium alloy heat conductor arranged at one or more ends of the built-in magnetic energy generator may function as follows. Firstly, the aluminium alloy heat conductor shields the outward high-frequency electromagnetic interference and radiation generated by the magnetic energy generator. Secondly, the aluminium alloy heat conductor may be used to fix the built-in magnetic energy generator in relation to the internal hole of the lamp body so as to ensure a relative large space for air convection in the internal hole, thereby cooling down the lamp body and the built-in magnetic energy generator simultaneity and effectively. Thirdly, the aluminium alloy heat conductor acts as connection means for mounting the magnetic energy lamp to a lamp holder.

B. The built-in magnetic energy generator is composed of one or more separate magnetic cores located in the lamp body having a through hole or internal hole. A fixed space distance is formed between close magnetic circuits of two separate internal magnets opposite to each other. The built-in magnetic energy generator is a magnet with a hole. The aluminium alloy heat conductor with a hole is used to form air convection between the built-in magnetic energy generator and the aluminium alloy heat conductor, so that the temperature increase of the magnetic energy generator is restrained. The lamp body temperature of the 165W magnetic energy lamp with the built-in magnetic energy generator can be reduced to 96°C∼115 °C.

C. The built-in magnetic energy generator works at a resonant frequency lower than 36∼190KHz. The electronic circuit and the built-in magnetic energy generator operate stably and reliably. The high frequency interference and radiation outwards are reduced, and the electromagnetic conversion efficiency and the stability of the circuit are improved. Since the resonant operating frequency of the built-in magnetic energy generator is reduced to 36∼190KHz and a heat dispersion mechanism is added, the temperature of the magnetic energy lamp with the built-in magnetic energy generator is reduced, the durability of the fluorescent powders is increased, the light attenuation is reduced, the lifetime of the magnetic energy lamp with the built-in magnetic energy generator is lengthened, and the energy saving efficiency is improved by 28% ∼ 48% as compared with the electrodeless lamps or energy saving lamps

In the magnetic energy lamp with the built-in magnetic energy generator, a special process and a stucco technology are used to lengthen the time during which the fluorescent powders and the glass lamp body penetrate to each other. The light attenuation in 2,000 hours is less than 8%, the light attenuation in 20,000 hours is less than 25%, and the lifetime of the magnetic energy lamp is up to 50,000 ∼ 100,000 hours. After the magnetic energy lamp has been used for 200 hours, its luminous efficiency may reach 70Lm∼110Lm and its color rendering index may be up to 87 or more.

D. An electronic circuit for protecting the lamp from being shorted and for illumination self-recovering is designed in the magnetic energy lamp. When the uninterrupted power supply is used, the output load end of the magnetic energy lamp is shorted. The magnetic energy lamp is self-activated to re-illuminate when the output load end is no longer shorted so as to activate the magnetic energy lamp to re-illuminate. At present, this is an advanced technology in the illuminating field.

E. The magnetic energy lamp may be designed to have an ultra thin plane-type lamp body, so that it can be widely used in the field of back light source. As compared with the currently used back light source, the source brightness may be improved by 3∼6 times, the energy consumption may be saved by 60%∼120%, and the lifetime may be 6∼10 times of that of the conventional back light source.

Based on the above-mentioned designs, structures of specific examples according to the present application are as follows.

As shown in Figs. 1-1 to 1-8, according to a first embodiment of the present application, the magnetic energy lamp has a tambourin-shaped lamp body 101 with a through hole 104. The lamp body comprises a small glass tube 102 at one end or both ends thereof for receiving indium network or amalgam. The tube 102 is hermetically connected to the body and extends in the middle of the lamp body. A drainage hole 103 made of glass is arranged at one end or both ends of the lamp body. A single magnetic energy generator 106 may be installed in the through hole as a single-generator configuration. Alternatively, two magnetic energy generators 106 may be installed in the through hole as a double-generator configuration.

In the double-generator configuration, a top support 108 is mounted between the two magnetic energy generators, and a metal member 105 for heat dispersion and shielding is attached to each end of the two-end magnetic energy generators. One end of the metal member 105 is used as a mounting rack 107 for fixedly connecting to the lamp holder.

In the single configuration, a metal member 105 for heat dispersion and shielding is attached to each end of the magnetic energy generator. One end of the metal member 105 is used as a mounting rack 107 connected fixedly to the lamp holder.

As shown in Figs. 2-1 to 2-6, according to a second embodiment of the present application, the magnetic energy lamp has an olive-shaped lamp body 201 with a separately located chamber at each end. The lamp body 201 comprises a small glass tube 203 at one end or both ends thereof. The small glass tube 203 is hermetically connected to the body for receiving indium network or amalgam. A drainage hole 204 made of glass is arranged at one end or both ends of the lamp body. Magnetic energy generators 205 are installed in the chambers. The chambers are of semi-closed internal holes 202. Two magnetic energy generators 205 are arranged separately. Metal members 206 for heat dispersion and shielding are attached to outer ends of the magnetic energy generators 205. A tail end of the metal member 206 is used as a mounting rack 207 connected fixedly to the lamp holder.

As shown in Figs. 3-1 to 3-6, the magnetic energy lamp according to a third embodiment of the present application comprises an olive-shaped lamp body 301 with a through hole 302. A small glass tube 303 for receiving indium network or amalgam is hermetically connected to the lamp body at one end or both ends thereof. A drainage hole 304 made of glass is arranged at one end or both ends of the lamp body 301. Magnetic energy generators 305 are installed in the through hole 302. Metal members 306 for heat dispersion and shielding are attached to two outer ends of the magnetic energy generators 305. A terminal end of the metal member 306 is used as a mounting rack 307 connected fixedly to the lamp holder.

As shown in Figs. 4-1 to 4-8, the magnetic energy lamp according to a fourth embodiment of the present application comprises an oblate lamp body 401 with a through hole 404. A small glass tube 402 for receiving indium network or amalgam is hermetically connected to the body 401 at one end or both ends thereof. A drainage hole 403 made of glass is arranged at one end or both ends of the lamp body. A magnetic energy generator 405 is installed in the through hole 404. A single magnetic energy generator 405 may be installed in the through hole as a single-generator configuration. Alternatively, two magnetic energy generators 405 may be installed in the through hole as a double-generator configuration.

In the double-generator configuration, a top support 407 is mounted between the two magnetic energy generators, and a metal member 406 for heat dispersion and shielding is attached to each end of the two-end magnetic energy generators. A terminal end of the metal member 406 is used as a mounting rack connected fixedly to the lamp holder.

In the single configuration, the metal member 406 is attached to each end of the magnetic energy generator. A terminal end of the metal member 406 is used as a mounting rack connected fixedly to the lamp holder.

As shown in Figs. 5-1 to 5-8, according to a fifth example of the present application, the magnetic energy lamp has an olive-shaped lamp body 501 with a separately located chamber at one end. The lamp body 501 comprises a small glass tube 502, which is hermetically connected to the body 501 at one end or both ends thereof and used for receiving indium network or amalgam. A drainage hole 503 made of glass is arranged at one end or both ends of the lamp body. A magnetic energy generator 507 is installed in a chamber separately located in the lamp body 501. The chamber is an internal small glass tube 504 which is semi-closed at one end. The magnetic energy generator 507 is arranged separately. A metal member 506 for heat dispersion and shielding is attached to outer end of the magnetic energy generator 507. A tail end of the metal member 506 is used as a mounting rack connected fixedly to the lamp ho lder.

As shown in Figs. 6-1 to 6-4, in a cylinder magnetic energy generator with a hole according to the present application, the built-in magnetic energy generator is composed of a magnet 601, a frame 602, electromagnetic inductive coils 603 made of a copper stripe or a multi-strands enameled wire, and a lead wire 604.

As shown in Figs. 7-1 to 7-4, in a flat rectangle magnetic energy generator with a hole according to the present application, the built-in magnetic energy generator is composed of a magnet 701, a frame 702, electromagnetic inductive coils 703 made of a copper stripe or a multi-strands enameled wire, and a lead wire 704.

As shown in Figs. 8-1 to 8-4, in an oblate magnetic energy generator with a hole according to the present application, the built-in magnetic energy generator is composed of a magnet 801, a frame 802, electromagnetic inductive coils 803 made of a copper stripe or a multi-strands enameled wire, and a lead wire 804.

As shown in Figs. 9-1 to 9-4, in a U-shaped magnetic energy generator with a hole according to the present application, the built-in magnetic energy generator is composed of a magnet 901, electromagnetic inductive coils 902 made of a copper stripe or a multi-strands enameled wire, and a lead wire 903.

As shown in Figs. 10-1 to 10-4, in a flat plate-shaped rectangle magnetic energy generator with a hole according to the present application, the built-in magnetic energy generator is composed of a magnet 1001, a frame 1002, electromagnetic inductive coils 1003 made of a copper stripe or a multi-strands enameled wire, and a lead wire 1004.

The magnetic energy lamp according to the present application may overcome the defects in the prior art and improve on the following aspects.

1. The built-in magnetic energy generator provided in the present application is formed by soft magnetic materials, such as amorphous soft magnetic materials or nanocrystal soft magnetic materials, wound by copper stripes.

2. As compared with the electrodeless lamp having a resonant operating frequency of 2.6MHz ∼ 2.8MHz, the magnetic energy lamp with the built-in magnetic energy generator has a lower resonant frequency of 52 - 190KHz. Thus, it is possible to reduce the cost and difficulty for suppressing the EMI (Electromagnetic Interference) and EMC (Electromagnetic Compatibility). The electromagnetic loss is also reduced and the efficiency of electromagnetic conversion is improved by 25∼36%. The temperature increase in electronic circuits is restrained and the reliability of the electronic circuits is improved.

3. An ASIC (application specific integrated circuit) is used in the magnetic energy lamp such that a driving circuit is capable of controlling a high-side or low-side driving power switch to be on or off based on zero-voltage and zero-current. The temperature increase of the MOSFET is also restrained, so that the temperature shifting and common conduction are avoided when the MOSFET operates at a frequency of 52 - 190 KHz during its switching time and transconducting time.

4. A simple, practical and cheap alternating circuit dedicated to the magnetic energy lamp is designed. When the magnetic energy lamp works at a power of 165W, the temperature of the lamp body can be reduced to 96°C∼115°C, which is lower than the temperature of the lamp body of the 165W electrodeless lamp by 20°C.

5. A bowl-shaped heat dispersion surface is arranged on top of the lamp body of the magnetic energy lamp so as to increase the area for dispersing heat. An aluminium shielding mesh is arranged at bottom of the bowl-shaped heat dispersion surface to protect the high frequency electromagnetic wave from being radiated outwards.

6. The built-in magnetic energy generator with a single end is formed by a magnet with a hole. An aluminium alloy ring for fixing the magnetic energy generator may be arranged on the top of the magnetic energy generator, so that the high frequency electromagnetic wave radiated outwards is shielded while the magnetic energy generator is fixed on the lamp body. Accordingly, air convection can be formed between the magnetic energy generator and the lamp body for implementing the heat dispersion and temperature reduce.

7. Alternatively, the built-in magnetic energy generator with two or more ends is formed by a magnet with a hole, which is mounted in the internal hole or through hole of the lamp body. Distances between the magnetic energy generator and various surface of the lamp, the location of the magnetic energy generator in the lamp, and the gas interval are determined so that the magnetic energy generator has a relatively fixed close magnetic circuit, thereby the distance of coupling magnets and electromagnetic strength of the close magnetic circuit are determined. Temperature of the circuits, magnets and lamp body is reduced, and thus the temperature increase thereof is restrained. The efficiency of the electromagnetic conversion increases by 25∼36%, and the strength of the electromagnetic induction is improved by 2 - 4 times. The magnetic energy generator located in the glass lamp body with a through hole or internal hole and coated with fluorescent powders may operate continuously in a stable state. The temperature of the lamp body of a 165W magnetic energy lamp with the built-in magnetic energy generator may be reduced to 96°C∼115°C. The circuits in the lamp may work stably and reliably. The efficiency of the electromagnetic conversion is improved, the luminous efficiency is increased, and the lifetime of the magnetic energy lamp is lengthened.

8. The magnetic energy lamp has an enlarged range of 1W ∼ 1000W for the input power, and thus the application of the magnetic energy lamp is widened.

As compared with the prior art, the built-in magnetic energy generator of the present application has a light attenuation less than 8% per 2,000 hours, while the compact fluorescent lamp has a light attenuation more than 20% per 2,000 hours. The lifetime of the bulb of the magnetic energy lamp is lengthened to 50,000 ∼100,000 hours, which is 16 times of that of the bulb of the compact fluorescent lamp.

The large-power compact fluorescent lamp has a luminous efficiency of 48∼53 Lm/W, while the magnetic energy lamp with the built-in magnetic energy generator has a luminous efficiency of 80∼110 Lm/W. The energy saving efficiency of the magnetic energy lamp with the built-in magnetic energy generator is improved by 35% ∼ 48% as compared with the compact fluorescent lamp.

The compact fluorescent lamp has an input power of 3∼120 W, while the magnetic energy lamp with the built-in magnetic energy generator may have an input power of 1∼1,000 W.

The compact fluorescent lamp has a power factor of 0.6 - 0.95, while the magnetic energy lamp with the built-in magnetic energy generator may have a power factor of 0.96 ∼0.999.

The electrodeless lamp has an input power of 23∼165 W, while the magnetic energy lamp with the built-in magnetic energy generator may have an input power of 1∼1000 W.

A 23W compact electrodeless lamp "Genura" provided by General Electric Company is disclosed in "Lamps and Lighting" edited by J.R. Coaton and A. M. Marsden in 1994. The lamp has a lifetime of 1,000 hours and a luminous efficiency of 48 Lm/W.

The 23W compact magnetic energy lamp with the built-in magnetic energy generator has a lifetime of 28,000 hour and a luminous efficiency of 80 - 90 Lm/W.

The electrodeless lamp has only one shape of pear, while the magnetic energy lamp with the built-in magnetic energy generator may be designed into any shape, such as plate, olive, bulb, rectangle, cylinder, straight tube, oblate, and so on.

The electrodeless lamp has only one electromagnetic coupling form, i.e., to locate ferrite magnetic materials in the middle of the bottom of the lamp body. Thus it has a low efficiency of electromagnetic conversion and a low magnetic field strength for the electromagnetic induction.

The magnetic energy lamp with the built-in magnetic energy generator may be designed to have a various forms of electromagnetic induction. For example, it may comprises a single end or two or more ends in series or parallel, which may be formed by amorphous soft magnetic materials, nanocrystal soft magnetic materials, or other soft magnetic materials. It has a high efficiency of electromagnetic conversion, and its magnetic field strength of the electromagnetic induction increases by 2∼4 times.

The luminous efficiency of the electrodeless lamp is 46 ∼ 53 Lm/W, while that of the magnetic energy lamp with the built-in magnetic energy generator is 80 ∼ 110 Lm/W.

The power factor of the electrodeless lamp is 0.55∼0.98, while that of the magnetic energy lamp with the built-in magnetic energy generator is 0.96∼0.99.

The resonant operating frequency of the electrodeless lamp is 2.6 MHz∼2.8 MHz. The circuit for such a lamp is complicated. The conductive interference, the high frequency electromagnetic interference and the high frequency electromagnetic radiation are considerable and difficult to be suppressed. The circuit is complicated and costly. It will lead to a low efficiency of electromagnetic conversion, a large loss, large power consumption, a high temperature increase and a low reliability.

The magnetic energy lamp with the built-in magnetic energy generator operates at a frequency of 36∼190KHz, and the circuit design therefor is simplified and thus has a low cost. The conductive interference, the high frequency electromagnetic interference and the high frequency electromagnetic radiation are reduced and thus easy to be suppressed with a high efficiency of electromagnetic conversion, a low loss, a low power consumption, a low temperature increase and a high reliability.

Generally, the temperature of the 165W electrodeless lamp is around 126 °C ∼ 135 °C. In such lamps, means for electromagnetic coupling and electromagnetic induction and the electronic circuit do not have over-current protection function, over-voltage protection function, over-temperature protection function and short protection circuit, and thus are not reliable.

The temperature of the 165W magnetic energy lamp with the built-in magnetic energy generator can be reduced to 96°C∼118°C. The electronic circuit is designed to have over-current protection function, over-voltage protection function, over-temperature protection function and short protection circuit, and the function of self-recovering to illuminate. The circuit is reliable and thus the reliability of the built-in magnetic energy generator and the lamp are ensured.

The magnetic material used in the means for electronic coupling in the electrodeless lamp is soft magnetic ferrite. The input power of the electrodeless lamp is limited by physical performance of the soft magnetic ferrite. Thus, it is difficult to produce an electrodeless lamp with a low power of 3W or a high power of 200W.

Amorphous soft magnetic materials, nanocrystal soft magnetic materials, or other soft magnetic materials with a physical performance much better than that of the soft magnetic ferrite are used in the magnetic energy lamp with the built-in magnetic energy generator. Therefore, it is possible to produce a magnetic energy lamp with a low power of 1W, a high power of 300W, and a super-high power of 1000W.

The electrodeless lamp has been researched for about 20 years and is still in the testing period. Due to the complicated circuit, the costly manufacture, the electrodeless lamp with high frequency electromagnetic radiation and electromagnetic pollution cannot be widely used.

The electrodeless lamp is limited by the following factors: the high frequency electromagnetic radiation and electromagnetic pollution represented at the resonant frequency of 2.6 MHz for the high frequency electromagnetic coupling; an unstable and unreliable operation under the high frequency electromagnetic induction at the resonant frequency of 2.6 MHz; an unreasonable wholly closed lamp body structure; the ferrite high frequency electromagnetic coupling means working in a wholly close critical temperature while the lamp body has a high temperature of 126∼135°C and the costly manufacture.

The material used in the means for electromagnetic coupling in the electrodeless lamp is ferrite soft magnetic material. The curie temperature of a ferrite is inversely proportional to the initial permeability thereof. The physical performance of the ferrite will change greatly and unstably under the ambient temperature of 126∼ 135°C and thus the strength of the electromagnetic induction will be decreased linearly. Accordingly, it is difficult to normally use the ferrite under the ambient temperature of 126∼135°C.

For the 165W electrodeless lamp, its lamp body usually have a temperature in the range of 126°C∼135°C. It is very difficult for the means for high frequency electromagnetic coupling in the lamp to disperse heat. The physical performance is quite unstable.

The electrodeless lamp operates at a frequency of 2.6MHz ∼ 2.8MHz and has a large magnetic loss. Therefore, when an alternating current occurs in the ferrite magnetic material wounded by the electromagnetic inductive coil, the physical performance of the ferrite magnetic material under a high temperature and large current is degraded, the curie temperature decreases sharply and linearly. Therefore, the physical stability of the magnetic material wound by coils and thus the magnetic field strength induced by the electromagnetic induction are out of control, so that the current and voltage induced by the electromagnetic induction increase continuously, which influences the resonant frequency of the electromagnetic induction.

The change of the resonant frequency leads to an unstable input power of the electrodeless lamp, so that the physical performance of the magnetic material degrades when the temperature increases to form a vicious cycle. In such a case, magnetic saturation occurs in the ferrite, resulting in a loss of excitation, the power switch being burnt and thus the lighting failure.

The electrodeless lamp works at a frequency of 2.6MHz - 2.8MHz, which greatly limits the design of the electronic circuit. In such lamps, it is difficult to suppress the electromagnetic interference, electromagnetic compatibility, radio frequency interference and electromagnetic radiation. Among other things, the driving circuit is required to turn on or turn off the power switch by the zero-voltage and the zero-current. Thus, the switching time, internal resistance and transconduction of the MOSFET should be adapted to the operating frequency of 2.6MHz - 2.8MHz of the electrodeless lamp so as to avoid the temperature shifting and common conduction, which is difficult to be carried out.

Since the temperature of the ferrite under the unstable state increases continuously, and the temperature shifting of the power switch is out of control and the operation of the power switch degrades when the temperature of the power switch increases, in many electrodeless lamps, especially an electrodeless lamp with a large power, the circuit is unstable and unreliable resulting in power component burnt and circuit failure.

The electrodeless lamp operates at a frequency of 2.6MHz ∼ 2.8MHz. The temperature in the lamp body increases up to 126°C∼135°C shortly after the lamp is activated to emit light. The electromagnetic coupling generator in the lamp body always operates in the ambient temperature of 126°C∼135°C. In such temperature, it is difficult to keep the initial permeability of the ferrite and the curie temperature and physical performance of the original soft magnetic material. The lamp body temperature of 126°C∼135°C accelerates a deterioration of the luminous efficiency of the fluorescent powders and thus the light attenuation of the electrodeless lamp. Therefore, the luminous efficiency, the lifetime and the reliability of the electrodeless lamp is influenced.

In view of the above, the magnetic energy lamp with the built-in magnetic energy generator according to the present application has essential improvements on an integrated performance and various targets as compared with the prior art. The magnetic energy lamp with the built-in magnetic energy generator according to the present application is efficient and has a long lifetime, and thus is an ideal lamp for illuminating.

## Claims

1. A magnetic energy lamp comprising a lamp body and at least one built-in magnetic energy generator, wherein at least one through hole or internal hole is arranged in the lamp body, the magnetic energy generator is mounted in the through hole or internal hole, and the magnetic energy generator is coupled to an inversing or alternating circuit of the magnetic energy lamp by an electromagnetic induction therebetween, wherein the inversing or alternating circuit is formed by a coupling driven pulse transformer or a half-bridge or full-bridge driven IC.

2. The magnetic energy lamp of claim 1, wherein each end of the through hole is hermetically connected to an end of the lamp body so as to form a vacuum chamber, which is filled with inert gases and coated with rare earth fluorescent powders.

3. The magnetic energy lamp of claim 2, wherein the through hole has a shape of ellipse, circle, oblate, semi-circle, rectangle, square or polygon.

4. The magnetic energy lamp of claim 3, wherein the lamp body with the through hole is made of glass materials and has a shape of ellipse, sphere, straight tube, olive, oblate, circle, or flat plate.

5. The magnetic energy lamp of claim 4, wherein a drainage hole is provided at one or two ends of the lamp body, and a small glass tube for receiving indium network or amalgam is hermetically connected to the lamp body at one or two ends of thereof and extends in middle of the lamp body.

6. The magnetic energy lamp of claim 1, wherein the internal hole has a closed front end and an open back end, the front end extends in the lamp body and the back end is hermetically connected to one end of the lamp body so as to form a vacuum chamber, which is filled with inert gases and coated with rare earth fluorescent powders, the internal hole has a shape of ellipse, circle, oblate, semi-circle, rectangle, square or polygon.

7. The magnetic energy lamp of claim 6, wherein the lamp body with the internal hole is made of glass materials and has a shape of ellipse, sphere, straight tube, olive, oblate, circle, or flat plate.

8. The magnetic energy lamp of claim 1, wherein the magnetic energy generator comprises soft magnetic materials with or without a hole, the soft magnetic materials are amorphous soft magnetic materials, nanocrystal soft magnetic materials, or soft magnetic ferrite materials, with a shape of ellipse, circle, oblate, semi-circle, rectangle, square or polygon.

9. The magnetic energy lamp of claim 8, wherein the soft magnetic materials of the built-in magnetic energy generator are coated with an insulating material or covered by a frame, an electromagnetic inductive coil is wound on the insulating material or the frame, and the electromagnetic inductive coil is a stripe or a multi-strands enameled wire wrapped by an insulating material.

10. The magnetic energy lamp of claim 8, wherein the magnetic energy generator is an air-core coil formed by a multi-strands enameled wire or a multi-level stripe or enameled wire wound on one or more ends of the lamp body or a coil frame located on one or more ends of the lamp, wherein the air-core coil is powered by the alternating circuit of the magnetic energy lamp such that it is coupled to the alternating circuit by an electromagnetic induction therebetween, thereby the lamp body is activated to emit light.

11. The magnetic energy lamp of claim 1, wherein a metal member for heat dispersion and shielding is mounted at an outer end of the lamp body where the magnetic energy generator is connected, and the metal member is mounting means acting as a mounting rack connected fixedly to a lamp holder for holding the lamp.

12. The magnetic energy lamp of claim 11, wherein a bowl-shaped heat dispersion surface is arranged on top of the lamp body, and an aluminium shielding mesh is arranged at bottom of the bowl-shaped heat dispersion surface.

13. The magnetic energy lamp of claim 1, wherein the magnetic energy lamp has an electronic circuit resonant operating frequency in a range of 36 to 350 KHz and an electromagnetic induction resonant operating frequency in a range of 36 to 350 KHz.

14. The magnetic energy lamp of claim 1, wherein the magnetic energy lamp is configured so that an output load end thereof is shorted when the magnetic energy lamp is powered by an uninterrupted power supply, and wherein the magnetic energy lamp is self-activated to re-illuminate when the output load end is no longer shorted, or an input power supply needs to be shut and then restarted when the output load end is no longer shorted so as to activate the magnetic energy lamp to re-illuminate.
